# EUROPEAN PATENT APPLICATION

(11) **EP 3 491 919 A1**
(43) Date of publication of application: **05.06.2019**
(21) Application number: 18210047.9
(22) Date of filing: 04.12.2018
(51) Int. Cl.: A01K 63/04, F04D 15/00

(54) **EFFLUENT SWITCHING DEVICE**

(30) Priority: 04.12.2017 CN 201721664193 U
(71) Applicant: Guangdong Boyu Group Co., Ltd, Raoping County Chaozhou Guangdong 515700 (CN)
(72) Inventor: YU, Bingyan, Chaozhou City, Guangdong 515700 (CN); YU, Jianqin, Chaozhou City, Guangdong 515700 (CN)
(74) Representative: Krauns, Christian

(57) **Abstract**

Disclosed is an effluent switching device which includes a water outlet base (1) disposed at an outlet end of a suction pipe and a rotating mechanism inserted into the water outlet base (1). A water outlet (112, 26) is defined in the rotating mechanism. When the rotating mechanism is moved to a first position relative to the water outlet base (1), the water outlet (112, 26) communicates with the suction pipe to define a first water outlet (112, 26) channel; and when the rotating mechanism is moved to a second position relative to the water outlet base (1), the water outlet (112, 26) communicates with the suction pipe to define a second water outlet (112, 26) channel. When the effluent switching device is installed on the suction pipe of a water pump, the water outlet base (1) and the rotating mechanism can work in conjunction to adjust a position of the rotating mechanism, achieving the purpose of switching between the first water outlet (112, 26) channel and the second water outlet (112, 26) channel.

## Description

### TECHNICAL FIELD

The present invention relates to the technical field of aquariums, and more particularly relates to an effluent switching device.

### BACKGROUND

The progress of the times allows people to have more and more space for leisure activities. Keeping pets has become a way of entertainment as well as releasing stress. One way of keeping pets is keep a pet fish in an aquarium, and accordingly the aquarium has become a piece of indispensable furniture or decoration in a home or working environment.

As aquariums get increasingly big, however, water discharge and change with the aquarium have become a big problem. At present, a siphon or a water pump plus a siphon is generally used for draining water from the aquarium. When only the siphon is used, air in the siphon needs to be emptied. When the water pump with the siphon is used, the water pump with the siphon as well as necessary duct connections needs to be prepared additionally. This leads to complicated water discharge and change operations thereby causing tremendous inconvenience for people.

In view of the above problem, there is an urgent need for an effluent switching device which is capable of convenient and rapid water discharge and change with the aquarium thus reducing the difficulty with water discharge and change.

### SUMMARY

An object of the present invention is therefore to provide an effluent switching device to achieve convenient and rapid water discharge and change with the aquarium thereby reducing water discharge and change difficulty.

To achieve this object, the present invention provides the technical solution described below.

An effluent switching device, including a water outlet base and a rotating mechanism.

The water outlet base is disposed at an outlet end of a suction pipe.

The rotating mechanism is inserted into the water outlet base. A water outlet is defined in the rotating mechanism; when the rotating mechanism is moved to a first configuration position relative to the water outlet base, the water outlet communicates with the suction pipe to define a first water outlet channel; and when the rotating mechanism is moved to a second configuration position relative to the water outlet base, the water outlet communicates with the suction pipe to define a second water outlet channel.

Furthermore, the rotating mechanism is a water outlet tube with one closed end, the water outlet tube is inserted into the water outlet base, and the water outlet is defined in a side wall of the water outlet tube or in the closed end of the water outlet tube.

Furthermore, a partition plate is disposed inside the water outlet tube along an axial direction of the water outlet tube, the partition plate divides the water outlet tube into a first cavity and a second cavity, and the water outlet includes a first water outlet and a third water outlet. The first water outlet is defined in an arcuate side wall of the first cavity or in the closed end of the water outlet tube, the third water outlet is defined in an arcuate side wall of the second cavity, and a bottom opening of the first cavity is a first water inlet and a bottom opening of the second cavity is a second water inlet.

A second water outlet is defined in the water outlet base.

When the water outlet tube is moved to the first configuration position relative to the water outlet base, the first water inlet is closed, and the second water outlet, the third water outlet, the second cavity, the second water inlet and the suction pipe communicate to define the first water outlet channel. When the water outlet tube is moved to the second configuration position relative to the water outlet base, the second water outlet is closed, and the first water outlet, the first cavity, the first water inlet and the suction pipe communicate to define the second water outlet channel.

Furthermore, the water outlet tube is provided with a rotary handle on the closed end and the rotary handle is configured for rotating the water outlet tube.

Furthermore, a flow guiding tube is disposed on an outer wall of the water outlet tube and an end of the flow guiding tube communicates with the first water outlet.

Furthermore, an annular groove is defined in an outer wall of the water outlet tube along a circumferential direction of the water outlet tube, a sealing ring is disposed in the annular groove and the sealing ring abuts against an inner wall of the water outlet base.

Furthermore, a first locking plate is projected downward out of a side wall of the water outlet tube, and the first locking plate is provided with a snap that is snap-fitted with a bottom end surface of the water outlet base at an end away from the water outlet tube.

Furthermore, a second locking plate is projected downward out of the side wall of the water outlet tube, the second locking plate is disposed adjacent to the first locking plate, and the first locking plate and the second locking plate work in conjunction with a limiting plate that is projected out of a bottom end of the water outlet base to restrict a circumferential rotation of the water outlet tube.

Furthermore, the water outlet base includes a communication tube, the second water outlet is defined in a side wall of the communication tube, and the limiting plate is projected inward in a radial direction of the side wall of the communication tube. When the water outlet tube is inserted into the communication tube and when the rotating mechanism is moved to the first configuration position relative to the communication tube, an end surface of the first water inlet abuts against the limiting plate to close the first water inlet, and when the water outlet tube is moved to the second configuration position relative to the communication tube, the second water outlet and the third water outlet are staggered to close the second water outlet.

Furthermore, the water outlet base further includes a flow guiding mechanism and the communication tube is disposed inside the flow guiding mechanism.

The present invention has the following beneficial effects:
The effluent switching device provided by the present invention is provided with a water outlet base and a rotating mechanism disposed within the water outlet base. The rotating mechanism is provided with a water outlet. The water outlet base and the rotating mechanism are then installed in conjunction on a suction pipe of a water pump in the aquarium. The position of the rotating mechanism, resulting in the rotating mechanism and the water outlet base in a first configuration position or a second configuration position. When the rotating mechanism is moved to the first configuration position relative to the water outlet base, the water outlet communicates with the suction pipe to defined a first water outlet channel so that water can be circulated within the aquarium. When the rotating mechanism is moved to the second configuration position relative to the water outlet base, the water in the aquarium can be discharged out of the aquarium for subsequent water change. The simple and rapid operations effectively solve the problem of complicated water discharge and change operations with the aquarium.

### BRIEF DESCRIPTION OF DRAWINGS

FIG. 1 is an exploded view of an effluent switching device according to an embodiment 1 of the present invention;
FIG. 2 is a first axonometric drawing of a water outlet tube according to the embodiment 1 of the present invention;
FIG. 3 is a second axonometric drawing of the water outlet tube according to the embodiment 1 of the present invention;
FIG. 4 is a schematic view of the effluent switching device in a first configuration position according to the embodiment 1 of the present invention;
FIG. 5 is a schematic view of the effluent switching device in a second configuration position according to the embodiment 1 of the present invention;
FIG. 6 is an exploded view of an effluent switching device according to an embodiment 2 of the present invention;
FIG. 7 is a first axonometric drawing of a water outlet tube according to the embodiment 2 of the present invention;
FIG. 8 is a second axonometric drawing of the water outlet tube according to the embodiment 2 of the present invention;
FIG. 9 is a first axonometric drawing of a water outlet base according to the embodiment 2 of the present invention;
FIG. 10 is a second axonometric drawing of the water outlet base according to the embodiment 2 of the present invention;
FIG. 11 is a sectional view of the effluent switching device in a first configuration position according to the embodiment 2 of the present invention; and
FIG. 12 is a sectional view of the effluent switching device in a second configuration position according to the embodiment 2 of the present invention.

In the drawings:
1: Water outlet base; 11: Communication hole; 111: Limiting plate; 112: Second water outlet; 113: Baffle; 12: Flow guiding mechanism; 121: Fixing tube; 122: Flow guiding plate;
2: Water outlet tube; 21: Flow guiding tube; 22: First locking plate; 221: Snap; 23: Second locking plate; 24: Sealing ring; 25: Rotary handle; 26: Third water outlet; 27: Partition plate; 28: First water inlet; 29: Second water inlet.

### DETAILED DESCRIPTION

To better illustrate the problem sought to be solved, the solutions adopted, and the effects that can be achieved in accordance with the present invention, the present invention will now be described in further detail in connection with some illustrative embodiments and the accompanying drawings. It is to be understood that the embodiments set forth below are intended for the mere purpose of illustration and not to limit the present invention. For ease of description, only a part, rather than all, related to the present invention is illustrated in the accompanying drawings.

### Embodiment 1

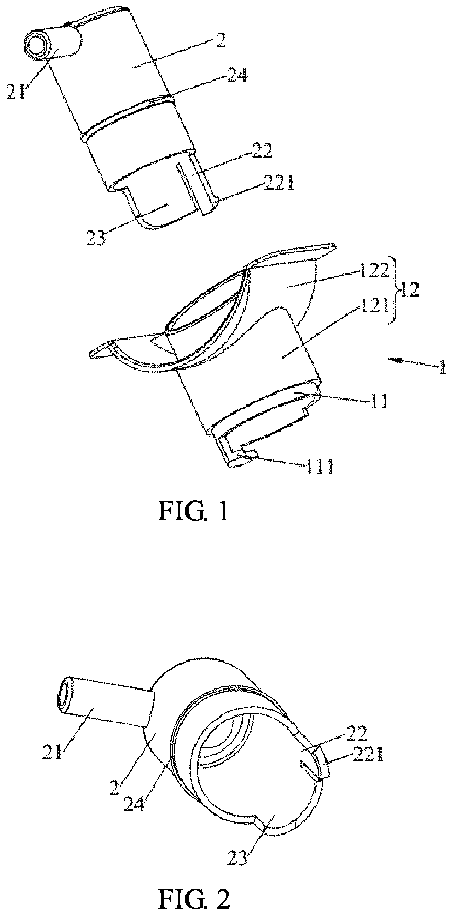

As shown in FIG. 1, this embodiment provides an effluent switching device including a water outlet base 1 and a rotating mechanism. The water outlet base 1 is installed at an outlet end of an existing suction pipe of a water pump in an aquarium. The rotating mechanism is a water outlet tube 2 with one closed end. The water outlet tube 2 is inserted into the water outlet base 1, and a water outlet (not shown in the figure) communicated with a cavity within the water outlet tube 2 is disposed on a side wall of the water outlet tube 2 or the closed end of the water outlet tube 2. When the rotating mechanism is moved to a first configuration position relative to the water outlet base 1, the water outlet communicates with the suction pipe to form a first water outlet channel; and when the rotating mechanism is moved to a second configuration position relative to the water outlet base 1, the water outlet communicates with the suction pipe to form a second water outlet channel.

The water outlet base 1 and the rotating mechanism are installed in conjunction on the suction pipe of the water pump in the aquarium and a position of the rotating mechanism is adjusted. When the rotating mechanism is moved to the first configuration position relative to the water outlet base 1, the water outlet communicates with the suction pipe to form the first water outlet channel to achieve water circulation in the aquarium. When the rotating mechanism is moved to the second configuration position relative to the water outlet base 1, the water outlet communicates with the suction pipe to form the second water outlet channel so that water in the aquarium may be discharge out of the aquarium for water exchange. The simple and rapid operation effectively solves a problem of complicated water discharge and exchange operations in the aquarium.

As shown in FIG. 1, the water outlet base 1 includes a flow guiding mechanism 12 and a communication tube 11 disposed inside the flow guiding mechanism 12. The flow guiding mechanism 12 includes a fixing tube 121 which is vertically disposed and a flow guiding plate 122 fixedly connected to the fixing tube 121. The flow guiding plate 122 is horizontally disposed and vertically connected to the fixing tube 121. The communication tube 11 has an oblique section at an end away from the suction pipe. A limiting plate 111 is projected downward out of a side wall of the communication tube 11. The limiting plate 111 has an L shape in whole and specifically includes a first limiting plate and a second limiting plate. The first limiting plate is projected downward out of the side wall of the communication tube 11. The second limiting plate is fixedly connected to the first limiting plate and vertically disposed with respect to the first limiting plate.

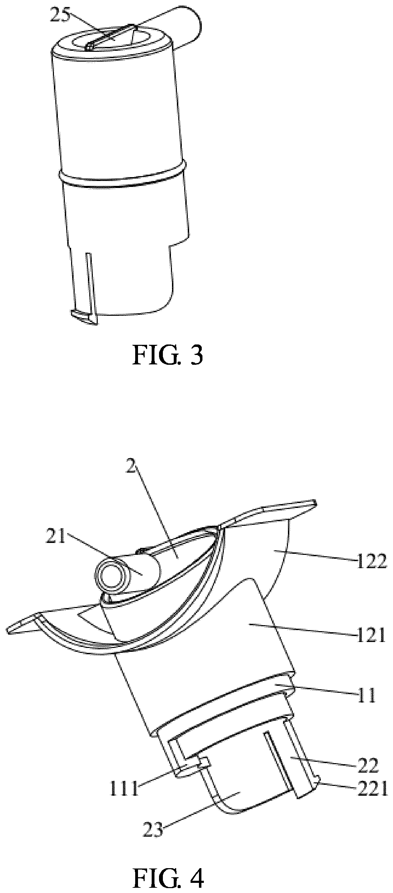

As shown in FIG. 2 and FIG. 3, the water outlet tube 2 is provided with a rotary handle 25 on the closed end for rotating the water outlet tube 2. The water outlet communicated with the cavity within the water outlet tube 2 and a flow guiding tube 21 communicated with the water outlet are disposed on the side wall of the water outlet tube 2 or the closed end of the water outlet tube 2. An annular groove is disposed on the side wall of the water outlet tube 2 along a circumferential direction thereof, and a sealing ring 24 is disposed in the annular groove. When the water outlet tube is installed inside the communication tube 11, the sealing ring 24 is in contact with an inner wall of the communication tube 11. The sealing ring 24 is disposed to achieve the sealing between an outer wall of the water outlet tube 2 and the inner wall of the communication tube 11 and prevent the water in the suction pipe from flowing out from a gap between the water outlet tube 2 and the communication tube 11.

A first locking plate 22 and a second locking plate 23 are projected downward out of the side wall of the water outlet tube 2. The first locking plate 22 is provided with a snap 221 that may be snap-fitted with a bottom end surface of the communication tube 11 at an end away from the water outlet tube 2. The snap 221 is used for restricting an axial movement of the water outlet tube 2 when the water outlet tube 2 is moved to the second configuration position relative to the communication tube 11. The second locking plate 23 is disposed adjacent to the first locking plate 22, and the first locking plate 22 and the second locking plate 23 work in conjunction with the limiting plate 111 to restrict a circumferential rotation of the water outlet tube 2 when the water outlet tube 2 is moved to the first configuration position relative to the communication tube 11.

How to use the effluent switching device will be described in detail below.

As shown in FIG. 4, when the water outlet tube 2 is moved to the first configuration position relative to the communication tube 11, an outlet end of the flow guiding tube 21 faces an interior of the aquarium, a lower end surface of the water outlet tube 2 is in close contact with an upper surface of the limiting plate 111, and the limiting plate 111 limits the second locking plate 23 of the water outlet tube 2 to restrict the circumferential rotation of the water outlet tube 2. At this time, the water in the aquarium flows through the suction pipe, the communication tube 11, the water outlet tube 2, the water outlet and the flow guiding tube 21 into the aquarium again, thereby achieving the water circulation in the aquarium.

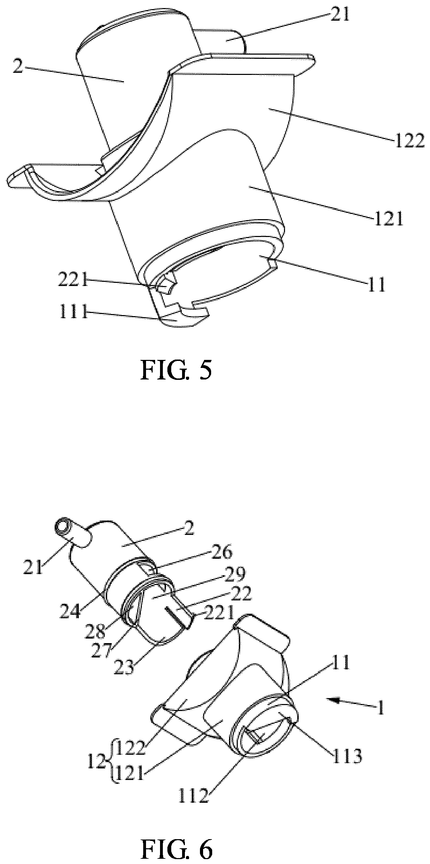

As shown in FIG. 5, after being lifted upward and rotated 180°, the water outlet tube 2 is moved to the second configuration position relative to the communication tube 11, the water outlet of the flow guiding tube 21 faces away from the interior of the aquarium, and a lower end surface of a tube wall of the communication tube 11 is in contact with an upper surface of the snap 221 disposed on the first locking plate 22 to restrict the axial movement of the water outlet tube 2 and prevent the water outlet tube 2 from continuing to rise to be away from the communication tube 11. At this time, the water in the aquarium flows through the suction pipe, the communication tube 11, the water outlet tube 2, the water outlet and the flow guiding tube 21 and is discharge out of the aquarium, thereby achieving the water discharge in the aquarium.

### Embodiment 2

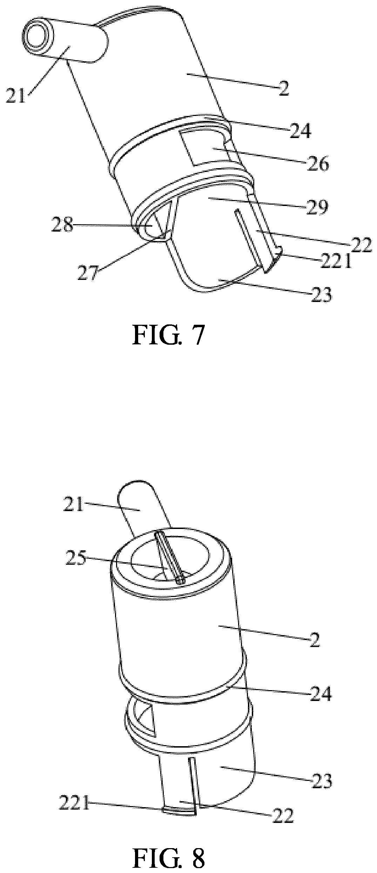

As shown in FIG. 6, this embodiment provides an effluent switching device including a water outlet base 1 and a rotating mechanism. The water outlet base 1 is installed at an outlet end of an existing suction pipe of a water pump in an aquarium. A second water outlet 112 is disposed on the water outlet base 1. The rotating mechanism is inserted into the water outlet base 1. As shown in FIG. 7 and FIG. 8, the rotating mechanism is a water outlet tube 2 with one closed end. A water outlet disposed on the water outlet tube 2 includes a first water outlet and a third water outlet 26. The water outlet tube 2 is inserted into a communication tube 11, and the water outlet tube 2 is provided with a rotary handle 25 on the closed end for rotating the water outlet tube 2. A partition plate 27 is disposed inside the water outlet tube 2 along an axial direction thereof, and a length of the partition plate 27 is less than or equal to a length of the water outlet tube 2. In this embodiment, the length of the partition plate 27 is equal to the length of the water outlet tube 2. The partition plate 27 divides the water outlet tube 2 into a first cavity and a second cavity. A bottom opening of the first cavity is a first water inlet 28, and a bottom opening of the second cavity is a second water inlet 29. The first water outlet is disposed on an arcuate side wall of the first cavity or on the closed end of the water outlet tube 2, and the third water outlet 26 is disposed on an arcuate side wall of the second cavity. A flow guiding tube 21 is disposed on an outer wall of the water outlet tube 2, and an end of the flow guiding tube 21 communicates with the first water outlet. In this embodiment, a sectional area of the first cavity is smaller than a sectional area of the second cavity and the sectional area of the first cavity is smaller than an area of a baffle 113 to enable the baffle 113 to close the first cavity or close the first water inlet 28 when a lower end of the water outlet tube 2 is in contact with the baffle 113.

When the rotating mechanism is moved to a first configuration position relative to the water outlet base 1, the first water inlet 28 is closed, and the second water outlet 112, the third water outlet 26, the second cavity, the second water inlet 29 and the suction pipe communicate to form a first water outlet channel. When the rotating mechanism is moved to a second configuration position relative to the water outlet base 1, the second water outlet 112 and the third water outlet 26 are staggered and closed, and the first water outlet, the first cavity, the first water inlet 28 and the suction pipe communicate to form a second water outlet channel.

To achieve the sealing between the water outlet tube 2 and the communication tube 11, two annular grooves are respectively disposed above and below the third water outlet 26 along a circumferential direction of the water outlet tube 2, a sealing ring 24 is disposed in the annular grooves, and the sealing ring 24 abuts against an inner wall of the communication tube 11.

To smoothly switch between the first water outlet channel and the second water outlet channel, a first locking plate 22 and a second locking plate 23 are disposed adjacently and extended downward out of a side wall of the water outlet tube 2 on a side of the second cavity. The first locking plate 22 is provided with a snap 221 that is snap-fitted with an end surface of a bottom tube wall of the communication tube 11 at an end away from the second cavity. An area of the second locking plate is greater than an area of the second water outlet 112 so that the second locking plate 23 may completely block the second water outlet 112 to close the second water outlet 112 when the water outlet tube 2 is moved to the second configuration position relative to the communication tube 11. The snap 221 at a lower end of the first locking plate 22 works in conjunction with the end surface of the bottom tube wall of the communication tube 11 to restrict the water outlet tube 2 in an axial direction and prevent the water outlet tube 2 from continuing to rise to be away from the communication tube 11 when the water outlet tube 2 is moved to the second configuration position relative to the communication tube 11. The first locking plate 22 and the second locking plate 23 work in conjunction with the baffle 113 to restrict the water outlet tube 2 in a circumferential direction and prevent a circumferential rotation of the water outlet tube 2 when the water outlet tube 2 is moved to the first configuration position and the second configuration position relative to the communication pipe 11.

When the water outlet base 1 and the rotating mechanism are installed in conjunction on the suction pipe of the water pump in the aquarium, a position of the rotating mechanism is adjusted to make the rotating mechanism moved to the first configuration position relative to the water outlet base 1 so that the second water outlet 112, the third water outlet 26, the second cavity, the second water inlet and the suction pipe communicate to form the first water outlet channel to achieve water circulation in the aquarium. When the rotating mechanism is moved to the second configuration position relative to the water outlet base 1, the flow guiding tube 21, the first water outlet, the first cavity, the firs water inlet 28 and the suction pipe communicate to form the second water outlet channel so that water in the aquarium may be discharge out of the aquarium for water exchange. The simple and rapid operation effectively solves a problem of complicated water discharge and exchange operations in the aquarium.

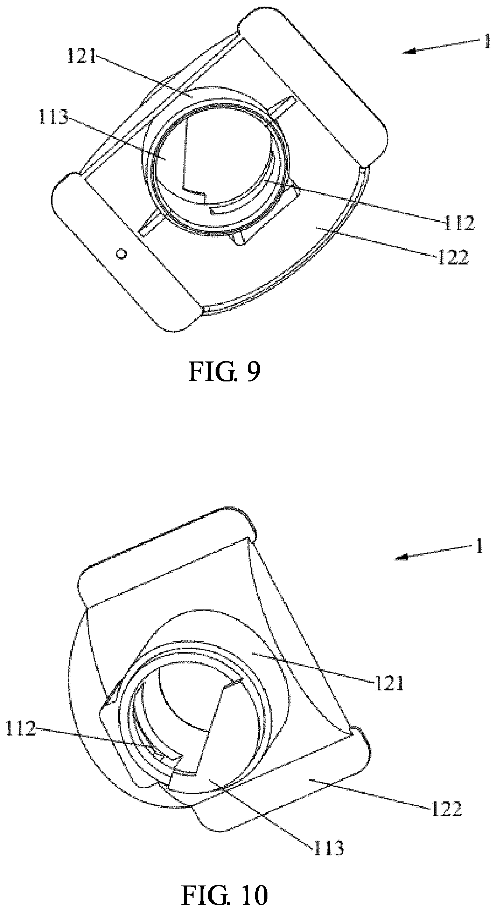

As shown in FIG. 9 and FIG. 10, the water outlet base 1 includes a flow guiding mechanism 12 and the communication tube 11 disposed inside the flow guiding mechanism 12. The flow guiding mechanism 12 includes a fixing tube 121 which is vertically disposed and a flow guiding plate 122 fixedly connected to the fixing tube 121. The flow guiding plate 122 is horizontally disposed and is vertically connected to the fixing tube 121. The communication tube 11 is disposed inside the fixing pipe 121. The communication tube 11 has an oblique section at an end away from the suction pipe. A baffle 113 is disposed inward in a radial direction where the communication tube 11 is connected to the suction pipe. In this embodiment, the baffle 113 has an irregular shape and an area of the baffle 113 is less than a sectional area of the communication tube 11. A second water outlet 112 is disposed on a bottom side wall of the communication tube 11. In this embodiment, a communication hole is disposed between the fixing tube 121 and the flow guiding plate 122 and the communication hole works in conjunction with the second water outlet 112. The second water outlet 112, the third water outlet 26 and the communication hole form the first water outlet channel, and the communication hole is vertically disposed. When the first water outlet channel is formed, the water flows out from the second water outlet 112 through the communication hole to an arcuate plate of the flow guiding plate 122 and then flows into the aquarium to achieve the water circulation in the aquarium.

The communication hole is disposed to work in conjunction with the second water outlet 112 to slow down a flow velocity of the water in the aquarium on the flow guiding plate 122 so that the water flow may be sufficiently in contact with air to increase oxygen content of the water. The arcuate plate of the flow guiding plate 122 is disposed to achieve a directional flow of the water.

How to use the effluent switching device will be described in detail below.

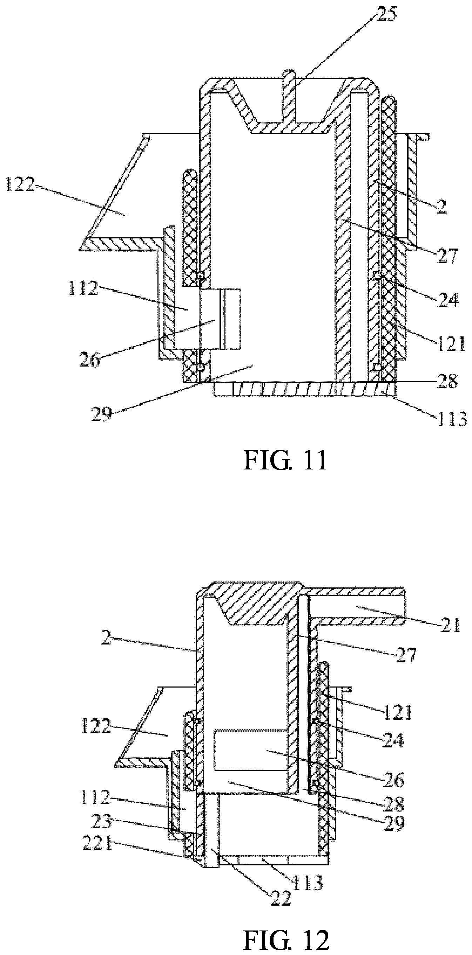

As shown in FIG. 11, when the water outlet tube 2 is moved to the first configuration position relative to the communication tube 11, the baffle 113 circumferentially restricts the first locking plate 22 and the second locking plate 23 to prevent the water outlet tube 2 from rotating in the circumferential direction. An end of the first cavity close to the baffle 113 is in close contact with the baffle 113 to close the first water inlet 28. At this time, the second water outlet 112, the third water outlet 26, the communication hole and the suction pipe communicate to form the first water outlet channel; the water drawn by the suction pipe of the water pump flows through the second water inlet, the second cavity, the third water outlet 26, the second water outlet 112, the communication hole and the flow guiding plate 122 into the aquarium again to achieve circulating filtration of the water in the aquarium.

As shown in FIG. 12, the water outlet tube 2 is rotated by a certain angle and lifted upward. In this embodiment, the rotation angle is 90°. When the water outlet tube 2 is moved to the second configuration position relative to the communication tube 11, the snap 221 at the lower end of the first locking plate 22 is located at a lower end of the end surface of the bottom tube wall of the communication tube 11, and an upper surface of the snap 221 is in contact with the end surface of the bottom tube wall of the communication tube 11 so that the communication tube 11 restricts the water outlet tube 2 in the axial direction and prevent the water outlet tube 2 from continuing to rise to be away from the communication tube 11; meanwhile, the baffle 113 circumferentially restricts the first locking plate 22 and the second locking plate 23 to circumferentially restrict the water outlet tube 2 and prevent the water outlet tube 2 from rotating circumferentially. At this time, the second locking plate 23 blocks the second water outlet 112 and an inner wall of the communication tube 11 blocks the third water outlet 26 to close the second water outlet 112 and the third water outlet 26 so that the water pumped by the water pump flows through the suction pipe, the first water inlet 28, the first cavity, the first water outlet and the flow guiding tube 21 out of the aquarium to achieve water discharge in the aquarium for water exchange.

The above embodiments describe only the basic principles and characteristics of the present invention and the present invention is not limited to the above embodiments. Various modifications and changes may be made in the present invention without departing from the spirit and scope of the present invention. These modifications and changes fall within the scope of the present invention. The scope of the present invention is defined by the appended claims and equivalents thereof.

## Claims

1. An effluent switching device, comprising:
a water outlet base (1), disposed at an outlet end of a suction pipe; and
a rotating mechanism, inserted into the water outlet base (1); wherein the rotating mechanism comprises a water outlet; when the rotating mechanism is moved to a first configuration position relative to the water outlet base (1), the water outlet communicates with the suction pipe to define a first water outlet channel; and when the rotating mechanism is moved to a second configuration position relative to the water outlet base (1), the water outlet communicates with the suction pipe to define a second water outlet channel.

2. The effluent switching device of claim 1, wherein the rotating mechanism is a water outlet tube (2) with a closed end, the water outlet tube (2) is inserted into the water outlet base (1), and the water outlet is defined in a side wall of the water outlet tube (2) or in the closed end of the water outlet tube (2).

3. The effluent switching device of claim 2, wherein a partition plate (27) is disposed inside the water outlet tube (2) along an axial direction of the water outlet tube (2), the partition plate (27) divides the water outlet tube (2) into a first cavity and a second cavity, and the water outlet comprises a first water outlet and a third water outlet (26); wherein the first water outlet is defined in an arcuate side wall of the first cavity or in the closed end of the water outlet tube (2), the third water outlet (26) is defined in an arcuate side wall of the second cavity, and a bottom opening of the first cavity is a first water inlet (28) and a bottom opening of the second cavity is a second water inlet (29);
a second water outlet (112) is defined in the water outlet base (1); and
when the water outlet tube (2) is moved to the first configuration position relative to the water outlet base (1), the first water inlet (28) is closed, and the second water outlet (112), the third water outlet (26), the second cavity, the second water inlet (29), and the suction pipe communicate with each other to define the first water outlet channel; when the water outlet tube (2) is moved to the second configuration position relative to the water outlet base (1), the second water outlet is closed (112), and the first water outlet, the first cavity, the first water inlet (28), and the suction pipe communicate with each other to define the second water outlet channel.

4. The effluent switching device of claim 2, wherein the water outlet tube (2) is provided with a rotary handle (25) at the closed end, the rotary handle (25) being configured for rotating the water outlet tube (2).

5. The effluent switching device of claim 3, wherein a flow guiding tube (21) is disposed on an outer wall of the water outlet tube (2), and an end of the flow guiding tube (21) communicates with the first water outlet.

6. The effluent switching device of claim 2, wherein an annular groove is defined in an outer wall of the water outlet tube (2) along a circumferential direction of the water outlet tube, and a sealing ring (24) is disposed in the annular groove, the sealing ring (24) abutting against an inner wall of the water outlet base (1).

7. The effluent switching device of any one of claims 2 to 6, wherein a side wall of the water outlet tube (2) protrudes downward to form a first locking plate (22), and one end of the first locking plate (22) away from the water outlet tube (2) is provided with a snap (221) that is operative to be snap-fitted with a bottom end surface of the water outlet base (1).

8. The effluent switching device of claim 7, wherein the side wall of the water outlet tube (2) protrudes downward to form a second locking plate (23), which is disposed adjacent to the first locking plate (22), wherein the first locking plate (22) and the second locking plate (23) work in conjunction with a limiting plate (111) that is projected out of a bottom end of the water outlet base (1) to restrict a circumferential rotation of the water outlet tube (2).

9. The effluent switching device of claim 8, wherein the water outlet base (1) includes a communication tube (11), the second water outlet (112) is defined a side wall of the communication tube (11), and the limiting plate (111) is projected inward in a radial direction of the side wall of the communication tube (11); when the water outlet tube (2) is inserted into the communication tube (11) and when the rotating mechanism is moved to the first configuration position relative to the communication tube (11), an end surface of the first water inlet (28) abuts against the limiting plate (111) to close the first water inlet (28), and when the water outlet tube (2) is moved to the second configuration position relative to the communication tube (11), the second water outlet (112) and the third water outlet (26) are staggered to close the second water outlet (112).

10. The effluent switching device of claim 9, wherein the water outlet base (1) further includes a flow guiding mechanism (12), and the communication tube (2) is disposed inside the flow guiding mechanism (12).
